# EUROPÄISCHE PATENTSCHRIFT

(11) **EP 4 309 277 B1**
(45) Veröffentlichungstag und Bekanntmachung des Hinweises auf die Patenterteilung: **30.04.2025**
(21) Anmeldenummer: 22717597.3
(22) Anmeldetag: 24.03.2022
(51) Int. Cl.: H02M 3/156, H02M 3/158

(54) **VERFAHREN ZUM BETRIEB EINES GLEICHSTROMSTELLERS ZUR VERSORGUNG EINER ELEKTROLYSEEINRICHTUNG MIT ELEKTRISCHER BETRIEBSENERGIE UND GLEICHSPANNUNGSWANDLER**
METHOD FOR OPERATING A DC CONVERTER FOR SUPPLYING AN ELECTROLYSIS DEVICE WITH ELECTRICAL OPERATING ENERGY AND DC/DC VOLTAGE CONVERTER
PROCÉDÉ DE FONCTIONNEMENT D'UN RÉGULATEUR DE COURANT CONTINU DESTINÉS À L'ALIMENTATION D'UN DISPOSITIF D'ÉLECTROLYSE EN ÉNERGIE ÉLECTRIQUE DE FONCTIONNEMENT ET CONVERTISSEUR DE TENSION DC/DC

(30) Priorität: 18.05.2021 EP 21174316
(43) Veröffentlichungstag der Anmeldung: 24.01.2024
(73) Patentinhaber: Siemens Energy Global GmbH & Co. KG, 81739 München (DE)
(72) Erfinder: STACH, Tilo, 91080 Uttenreuth (DE)
(86) Internationale Anmeldenummer: PCT/EP2022/057767
(87) Internationale Veröffentlichungsnummer: WO 2022/242936

(56) Entgegenhaltungen:
- WO-A1-2016/091300
- WO-A1-2019/043136

## Beschreibung

Die Erfindung betrifft ein Verfahren zum Betrieb eines Gleichstromstellers zur Versorgung einer Elektrolyseeinrichtung mit elektrischer Betriebsenergie.

Die Wasserstofferzeugung mittels Elektrolyse erfordert Gleichströme über mehrere Tausend Ampere, aber Gleichspannungen im Bereich von nur 100 bis 1400 Volt.

Hierzu werden Elektrolyseeinrichtungen durch die Anbindung an ein Mittelspannungs-Wechselstromnetz mit elektrischem Gleichstrom als Betriebsenergie versorgt. Die dabei zum Einsatz kommenden gesteuerten Gleichrichter sind netzgeführte Gleichrichter (Thyristoren) und müssen demnach prinzipbedingt immer an ein Wechselstromnetz angeschlossen werden.

Es besteht aber auch Bedarf daran, innerhalb kleinerer Inselnetze mit elektrischen Leistungen bis zu 10 MW Elektrolyseeinrichtungen mit elektrischer Betriebsenergie in Form von elektrischem Gleichstrom aus Solarzellen oder Windkraft zu versorgen.

Aus der DE 10 2012 201269 A1 ist eine Schaltungsanordnung und ein Verfahren zur wahlweisen Steuerung eines aus einer Gleichspannungsquelle gespeisten Wechselstrommotors oder Gleichstrommotors bekannt. Die Schaltungsanordnung weist zwei Wandlermodule mit gleich vielen Halbbrücken und eine mit der Anzahl der Halbbrücken in einem Wandlermodul übereinstimmende Anzahl von Brückensaugdrosseln sowie eine Steuereinheit zur Ansteuerung der Halbbrücken der Wandlermodule auf. Die Wandlermodule werden zur Steuerung eines Wechselstrommotors als ein Wechselrichter und zur Steuerung eines Gleichstrommotors als ein Gleichspannungswandler betrieben.

Aus der DE 10 2017 217948 A1 ist eine Antriebseinrichtung bekannt, die eine erste Halbbrücke mit einem ersten Phasenanschluss, eine zweite Halbbrücke mit einem zweiten Phasenanschluss, eine dritte Halbbrücke mit einem dritten Phasenanschluss und eine vierte Halbbrücke mit einem vierten Phasenanschluss aufweist, wobei der erste Phasenanschluss mit dem zweiten Phasenanschluss über eine erste stromkompensierte Drossel verbunden ist, welche einen ersten motorwicklungsseitigen Anschluss aufweist, wobei der dritte Phasenanschluss mit dem vierten Phasenanschluss über eine zweite stromkompensierte Drossel verbunden ist, welche einen zweiten motorwicklungsseitigen Anschluss aufweist. Die Halbbrücken werden innerhalb einer Halbwelle versetzt angesteuert.

In der internationalen Patentanmeldung WO 2016/091300 A1 ist ein vier Transistoren aufweisender Gleichstromsteller beschrieben, der einen Elektrolysewasserstoffspeicher speist. Die Transistoren werden hierbei pulsweitenmoduliert angesteuert.

Die WO 2019/043136 A1 offenbart einen Gleichstromsteller, der als ein DC/DC Wandler ausgeführt ist und der mehrere Leistungsschalter umfasst, an deren Ausgang Drosseln geschaltet sind. Die Leistungsschalter werden von einer Steuereinheit durch eine Predictive Pulse Pattern Control angesteuert.

Es besteht also Bedarf daran, Wege aufzuzeigen, wie z.B. zur Versorgung einer Elektrolyseeinrichtung mit elektrischer Betriebsenergie eine direkte Anbindung an ein Niederspannungs-Gleichstromnetz erreicht werden kann.

Die Aufgabe der Erfindung wird gelöst durch ein Verfahren zum Betrieb eines Gleichstromstellers zur Versorgung einer Elektrolyseeinrichtung mit elektrischer Betriebsenergie, bei dem in einem Schritt zumindest vier ansteuerbare Halbleiterschaltelemente in H-Brückenanordnung mit nachgeschalteten Saugdrosseln mit einer vorbestimmten Ansteuersignalfolge angesteuert werden zur direkten Wandlung einer elektrischen Eingangsgleichspannung in eine elektrische Ausgangsgleichspannung, wobei zumindest zwei Gleichspannungs-Wandlereinheiten mit je vier ansteuerbaren Halbleiterschaltelementen in H-Brückenanordnung mit nachgeschalteten Saugdrosseln verwendet werden, mit dem Schritt:Erfassen einer Anzahl der Gleichspannungs-Wandlereinheiten, und Anpassen der Ansteuersignalfolge an die erfasste Anzahl der Gleichspannungs-Wandlereinheiten.

Bei den ansteuerbaren Halbleiterschaltelementen kann es sich z.B. um als IGBT (insulated-gate bipolar transistor) ausgebildete Bipolartransistoren handeln. D.h., die ansteuerbaren Halbleiterschaltelemente können nicht nur wie Thyristoren gezündet werden, sondern auch durch ein entsprechendes Ansteuersignal in einen Sperrzustand unabhängig von einem Nulldurchgang gebracht werden. So kann der Gleichstromsteller als selbstgeführter Gleichstromsteller ausgebildet werden. Dabei ist der Gleichstromsteller zur Direktwandlung ausgebildet, d.h. es erfolgt keine Wechselrichtung der elektrischen Eingangsgleichspannung in eine elektrische Wechselspannung, gefolgt von einer Transformation mit anschließender Gleichrichtung, z.B. in einem Zwischenkreis.

So können entsprechende Transformatorverluste durch eine direkte Anbindung einer Elektrolyseeinrichtung ein Niederspannungs-Gleichstromnetz vermieden werden.

Es wird also ein Gleichstromsteller mit einem modularen Aufbau verwendet, der durch Hinzufügen oder Entfernen von Gleichspannungs-Wandlereinheiten an die jeweilige Last angepasst werden kann. Mit anderen Worten, der Gleichstromsteller kann als modular aufgebauter Multilevel-Gleichstromsteller aufgefasst werden. Vorab, d.h. vor seiner Inbetriebnahme bzw. während seiner Inbetriebnahme während einer Initialisierungsphase wird die Anzahl der Gleichspannungs-Wandlereinheiten selbsttätig, z.B. von einem Steuergerät des Gleichstromstellers, bestimmt und eine entsprechend angepasste Ansteuersignalfolge bereitgestellt.

Gemäß einer weiteren Ausführungsform weist der Schritt Anpassen der Ansteuersignalfolge an die erfasste Anzahl der Gleichspannungs-Wandlereinheiten ein Anpassen einer Taktfrequenz der Ansteuersignalfolge an die erfasste Anzahl der Gleichspannungs-Wandlereinheiten auf.

Das Anpassen kann ein Reduzieren der Taktfrequenz sein. Wenn z.B. zwei Gleichspannungs-Wandlereinheiten erfasst werden wird eine Ausgangstaktfrequenz für den Betrieb einer einzelnen Gleichspannungs-Wandlereinheit halbiert. Wenn hingegen z.B. vier Gleichspannungs-Wandlereinheiten erfasst wurden wird die Ausgangstaktfrequenz auf ein Viertel reduziert. Entsprechend wird bei z.B. bei acht Gleichspannungs-Wandlereinheiten die Ausgangstaktfrequenz auf ein Achtel reduziert. Grundsätzlich würden die Schaltverluste durch die größere Anzahl der Gleichspannungs-Wandlereinheiten in Parallelschaltungen zunehmen. Dem kann aber durch die reduzierten Taktfrequenzen entgegengewirkt werden, so dass die Energieeffizienz zumindest konstant oder sogar gesteigert werden kann.

Gemäß einer weiteren Ausführungsform weist der Schritt Anpassen der Ansteuersignalfolge an die erfasste Anzahl der Gleichspannungs-Wandlereinheiten ein Bereitstellen einer Ansteuersignalfolge zum zeitlich versetzten Ansteuern der ansteuerbaren Halbleiterschaltelemente der zumindest Gleichspannungs-Wandlereinheiten auf. D.h., wenn ein ansteuerbares Halbleiterschalteelement Gleichspannungs-Wandlereinheit durch Ansteuern sich in einem leitenden Zustand befindet, sind die ansteuerbaren Halbleiterschaltelemente der anderen Gleichspannungs-Wandlereinheiten in einem elektrisch sperrenden Zustand. So kann durch z.B. eine Verdopplung der Taktfrequenz über versetztes Takten der Halbbrücken zusammengeschalteten Gleichspannungs-Wandlereinheiten in Zusammenwirken mit den beiden Spannungsteiler wirkenden Saugdrosselhälften der Rippelstrom nochmals reduziert werden.

Ferner gehören zur Erfindung ein Computerprogrammprodukt, ausgebildet zum Ausführen des Verfahrens, ein Gleichspannungswandler zur Versorgung einer Elektrolyseeinrichtung mit elektrischer Betriebsenergie, und ein Steuergerät für einen derartigen Gleichspannungswandler. Das Steuergerät für einen Gleichspannungswandler ist derart ausgestaltet und ausgelegt, dass dieses bei einer Ansteuerung des Gleichspannungswandlers die Ansteuersignalfolge derart bestimmt, dass die erste Saugdrossel und die zweite Saugdrossel mit der gleichen elektrischen Stromstärke durchflossen werden.

Es wird nun die Erfindung anhand einer Zeichnung erläutert. Es zeigen:
Figur 1 in schematischer Darstellung Komponenten eines Gleichstromstellers.
Figur 2 in schematischer Darstellung weitere Details des in Figur 1 gezeigten Gleichstromstellers.
Figur 3 in schematischer Darstellung weitere Details des in Figur 1 gezeigten Gleichstromstellers.
Figur 4 in schematischer Darstellung eine Kombination des in den Figuren 1 bis 3 gezeigten Gleichstromstellers mit einem Gleichrichter.
Figur 5 in schematischer Darstellung einen Verfahrensablauf zum Betrieb des insbesondere in Figur 2 gezeigten Gleichstromstellers.

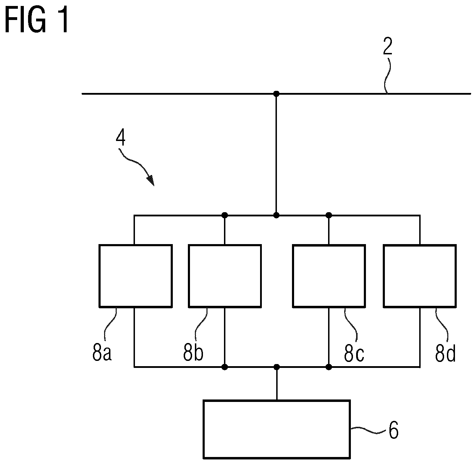

Es wird zunächst auf Figur 1 Bezug genommen.

Dargestellt ist ein elektrisches Netz 2, das im vorliegenden Ausführungsbeispiel als Niederspannungs-Gleichstromnetz ausgebildet ist.

Das Netz 2 ist im vorliegenden Ausführungsbeispiel als kleines Inselnetz mit einer elektrischen Leistung von bis zu 10 MW ausgebildet. Im vorliegenden Ausführungsbeispiel beträgt die elektrische Gleichspannung in dem elektrischen Netz 2 1500 V.

Das Netz 2 wird mit elektrischer Energie aus Solarzellen oder Windkraft versorgt. Als Verbraucher ist an dem Netz 2 eine Elektrolyseeinrichtung 6 (auch Elektrolyseur) angebunden.

Die Elektrolyseeinrichtung 6 ist dazu ausgebildet, mit dem von dem Netz 2 bereitgestellten elektrischen Strom eine chemische Reaktion, also eine Stoffumwandlung, herbeizuführen. Im vorliegenden Ausführungsbeispiel wird eine Wasserelektrolyse, also eine Zerlegung von Wasser in Wasserstoff und Sauerstoff, durchgeführt.

Die Wasserelektrolyse erfordert elektrische Gleichströme mit Stromstärken von mehrere Tausend Ampere, aber elektrische Gleichspannungen im Bereich von 100 bis 1400 Volt.

Hierzu werden die elektrische Spannung und die elektrische Stromstärke des Netzes 2 entsprechend umgewandelt. Für die direkte Umwandlung ist zwischen dem Netz 2 und der Elektrolyseeinrichtung 6 ein Gleichspannungswandler 4 vorgesehen.

Dabei wird unter einem Gleichspannungswandler 4 (auch Gleichstromsteller, DC-DC-Wandler, englisch DC-DC Converter) eine elektrische Schaltung verstanden, die eine am Eingang zugeführte elektrische Gleichspannung in eine elektrische Gleichspannung mit höherem, niedrigerem oder invertiertem Spannungsniveau umwandelt.

Der Gleichspannungswandler 4 ist im vorliegenden Ausführungsbeispiel als selbstgeführter und modular aufgebauter Multilevel-Gleichstromsteller aufgebaut. Der Gleichspannungswandler 4 weist im vorliegenden Ausführungsbeispiel vier Gleichspannungs-Wandlereinheiten 8a, 8b, 8c, 8d auf. Abweichend vom vorliegenden Ausführungsbeispiel kann die Anzahl n der Gleichspannungs-Wandlereinheiten 8a, 8b, 8c, 8d auch eine andere sein. Insbesondere kann vorgesehen sein, dass der Gleichspannungswandler 4 durch Hinzufügen oder Entfernen von einem oder mehreren Gleichspannungs-Wandlereinheiten 8a, 8b, 8c, 8d modular anpassbar an eine Last ist.

Im vorliegenden Ausführungsbeispiel sind die vier Gleichspannungs-Wandlereinheiten 8a, 8b, 8c, 8d jeweils identisch aufgebaut.

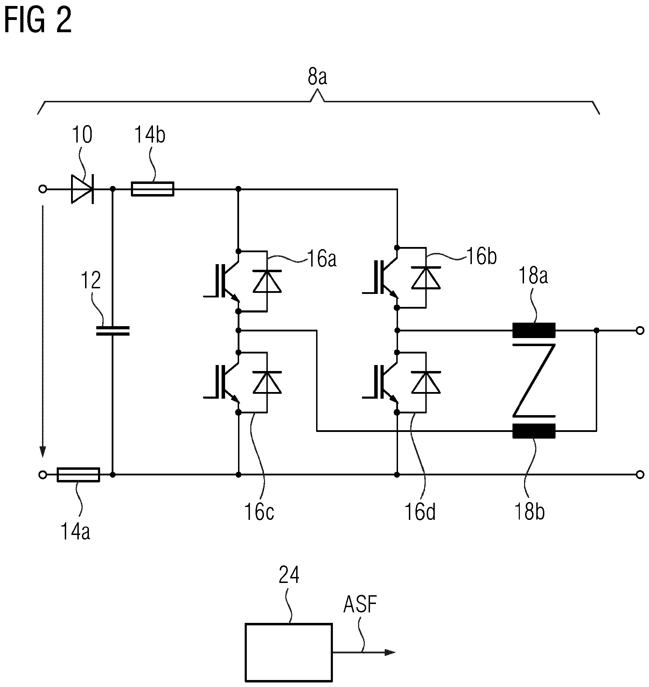

Es wird unter zusätzlicher Bezugnahme auf Figur 2 der Aufbau der Gleichspannungs-Wandlereinheit 8a erläutert.

Die Gleichspannungs-Wandlereinheit 8a weist im vorliegenden Ausführungsbeispiel eingangsseitig eine Diode 10, einen Kondensator 12 sowie eine erste Sicherung 14a und eine zweite Sicherung 14b auf.

Ferner weist die Gleichspannungs-Wandlereinheit 8a im vorliegenden Ausführungsbeispiel ein erstes ansteuerbares Halbleiterschalteelement 16a, ein zweites ansteuerbares Halbleiterschalteelement 16b, ein drittes ansteuerbares Halbleiterschalteelement 16c und ein viertes ansteuerbares Halbleiterschalteelement 16d auf.

Das erste ansteuerbare Halbleiterschalteelement 16a, das zweite ansteuerbare Halbleiterschalteelement 16b, das dritte ansteuerbares Halbleiterschalteelement 16c und das vierte ansteuerbares Halbleiterschalteelement 16d sind dabei brückenschaltungsartig in einer H-Brücke angeordnet, wobei das erste ansteuerbare Halbleiterschalteelement 16a und das dritte ansteuerbare Halbleiterschalteelement 16c einen ersten Brückenzweig und das zweite ansteuerbare Halbleiterschalteelement 16b und das vierte ansteuerbare Halbleiterschalteelement 16d einen zweiten Brückenzweig der Brückenschaltung bilden.

Das erste ansteuerbare Halbleiterschalteelement 16a, das zweite ansteuerbare Halbleiterschalteelement 16b, das dritte ansteuerbare Halbleiterschalteelement 16c und das vierte ansteuerbare Halbleiterschalteelement 16d weisen im vorliegenden Ausführungsbeispiel jeweils einen Bipolartransistor mit isolierender Gate-Elektrode auf. D.h., sie sind jeweils als IGBT (insulated-gate bipolar transistor) ausgebildet, dessen Kollektor den Eingang der Schalteinheit definiert und dessen Emitter den Ausgang der Schalteinheit definiert. Jedem ansteuerbaren Halbleiterschalteelement 16a, 16b, 16c, 16d ist im vorliegenden Ausführungsbeispiel jeweils eine Freilaufdiode zugeordnet.

Ausgangsseitig weist die Gleichspannungs-Wandlereinheit 8a eine erste Saugdrossel 18a und eine zweite Saugdrossel 18b auf. Dabei sind die erste Saugdrossel 18a und die zweite Saugdrossel 18b im Gegensinn magnetisch gekoppelt, d.h. die jeweiligen Magnetisierungen der ersten Saugdrossel 18a und der zweiten Saugdrossel 18b kompensieren sich. Die Verwendung von Saugdrosseln 18a, 18b ermöglicht vorteilhaft eine Begrenzung von Stromwelligkeiten eines elektrischen Stroms.

Ein Steuergerät 24 des Gleichspannungswandlers 4 ist dazu ausgebildet im Betrieb eine Ansteuersignalfolge ASF zur Ansteuerung der ansteuerbaren Halbleiterschaltelemente 16a, 16b, 16c, 16d bereit zu stellen, um eine direkte Wandlung einer elektrischen Eingangsgleichspannung in eine elektrische Ausgangsgleichspannung zu bewirken. Die Ansteuersignalfolge ASF wird dabei von dem Steuergerät 24 derart bestimmt, dass die erste Saugdrossel 18a und die zweite Saugdrossel 18b mit der gleichen elektrischen Stromstärke durchflossen werden.

Da die elektrischen Ströme in den jeweiligen Schenkeln der Saugdrosseln 18a, 18b entgegengesetzte, sich gegenseitig aufhebende Magnetfelder erzeugen, sind die beiden Saugdrosseln 18a, 18b derart ausgeblegt, dass die Längsinduktivität zwischen zwei Gleichspannungs-Wandlereinheiten 8a, 8b, 8c, 8d groß genug ist, einen elektrischen Querstrom von einem zum anderen Gleichspannungs-Wandlereinheit 8a, 8b, 8c, 8d ausreichend zu begrenzen. Es ist ferner möglich diesen elektrischen Querstrom durch Eingriffe in die Pulserzeugung auf ein Minimum zu reduzieren, um eine Sättigung des Drosselkerns zu verhindern. Da die elektrischen Ströme in den Schenkeln der jeweiligen Saugdrossel 18a, 18b entgegengesetzte, sich gegenseitig aufhebende Magnetfelder erzeugen, wird der Kern durch den Laststrom resultierend nicht oder nur gering magnetisiert, so dass er relativ klein dimensioniert werden kann.

Für diese und die weiteren, im Folgenden beschriebenen Aufgaben und/oder Funktionen kann insbesondere das Steuergerät 24 Hard- und/oder Software-Komponenten aufweisen.

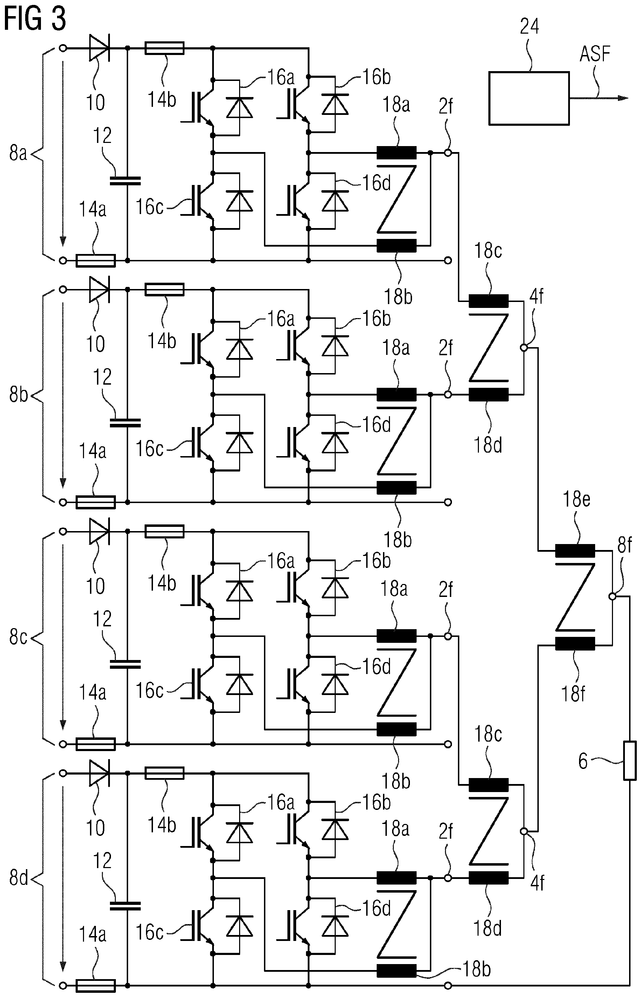

Es wird nun zusätzlich auf Figur 3 Bezug genommen.

Dargestellt sind die jeweils identisch aufgebauten vier Gleichspannungs-Wandlereinheiten 8a, 8b, 8c, 8d.

Dabei sind die erste Gleichspannungs-Wandlereinheit 8a und die zweite Gleichspannungs-Wandlereinheit 8b ausgangsseitig durch eine dritte Saugdrossel 18c und eine vierte Saugdrossel 18d magnetisch gekoppelt. Analog sind die dritte Gleichspannungs-Wandlereinheit 8c und die vierte Gleichspannungs-Wandlereinheit 8d ausgangsseitig in einer ersten Ebene magnetisch gekoppelt.

Ferner sind im vorliegenden Ausführungsbeispiel die jeweiligen dritten Saugdrosseln 18c und vierten Saugdrossel 18d ausgangsseitig in einer zweiten Ebene analog durch eine fünfte Saugdrossel 18e und eine sechste Saugdrossel 18e in einer dritten Ebene magnetisch gekoppelt.

Dabei sind im vorliegenden Ausführungsbeispiel die jeweiligen dritten Saugdrosseln 18c und vierten Saugdrossel 18d der zweiten Ebene sowie die fünfte Saugdrossel 18e und die sechste Saugdrossel 18e der dritten Ebene ebenfalls im Gegensinn magnetisch gekoppelt, d.h. die jeweiligen Magnetisierungen der jeweiligen Saugdrosseln 18c, 18d, 18e, 18f kompensieren sich.

Analog zum vorherigen Ausführungsbeispiel gemäß Figur 1 stellt das Steuergerät 24 des Gleichspannungswandlers 4 im Betrieb eine Ansteuersignalfolge ASF zur Ansteuerung der ansteuerbaren Halbleiterschaltelemente 16a, 16b, 16c, 16d bereit, um eine direkte Wandlung einer elektrischen Eingangsgleichspannung in eine elektrische Ausgangsgleichspannung zu bewirken.

Im vorliegenden Ausführungsbeispiel ist das Steuergerät 24 dazu ausgebildet, vorab, d.h. vor seiner Inbetriebnahme bzw. während seiner Inbetriebnahme während einer Initialisierungsphase, die Anzahl n der Gleichspannungs-Wandlereinheiten 8a, 8b, 8c, 8d zu bestimmen. Ferner ist im vorliegenden Ausführungsbeispiel das Steuergerät 24 dazu ausgebildet die Ansteuersignalfolge ASF an die erfasste Anzahl n der Gleichspannungs-Wandlereinheiten 8a, 8b, 8c, 8d anzupassen.

Das Anpassen der Ansteuersignalfolge ASF weist im vorliegenden Ausführungsbeispiel auf, dass eine Taktfrequenz f der Ansteuersignalfolge ASF an die erfasste Anzahl n der Gleichspannungs-Wandlereinheiten 8a, 8b, 8c, 8d angepasst wird. Dabei wird im vorliegenden Ausführungsbeispiel eine Ausgangstaktfrequenz entsprechend um die erfasste Anzahl n der Gleichspannungs-Wandlereinheiten 8a, 8b, 8c, 8d reduziert.

Wenn also zwei Gleichspannungs-Wandlereinheiten 8a, 8b erfasst wurden wird im vorliegenden Ausführungsbeispiel die Ausgangstaktfrequenz halbiert, um die Taktfrequenz f zu bestimmen. Wenn - wie im vorliegenden Ausführungsbeispiel - vier Gleichspannungs-Wandlereinheiten 8a, 8b, 8c, 8d erfasst wurden, wird die Ausgangstaktfrequenz auf ein Viertel reduziert um die Taktfrequenz f zu bestimmen. Entsprechend wird bei z.B. bei einer Anzahl n von acht die Ausgangstaktfrequenz auf ein Achtel reduziert, um die Taktfrequenz f zu bestimmen.

Im Betrieb werden im vorliegenden Ausführungsbeispiel jede der beiden Halbbrücken der Gleichspannungs-Wandlereinheiten 8a, 8b, 8c, 8d mit einer Taktfrequenz f mit z.B. 2 kHz getaktet. Am Ausgang der jeweiligen Gleichspannungs-Wandlereinheiten 8a, 8b, 8c, 8d erscheint bedingt durch die Parallelschaltung über die jeweiligen Saugdrosseln 18a, 18b ausgangsseitig die doppelte Taktfrequenz f einer Halbbrücke, also eine Frequenz von 4 kHz. Über die jeweilige Zusammenschaltung mit den jeweiligen Saugdrosseln 18c, 18d erscheint in analoger Art und Weise ausgangsseitig eine nochmals verdoppelte Frequenz von 8 kHz. Durch die weitere Zusammenschaltung mit den Saugdrosseln 18e, 18f erscheint in analoger Art und Weise ausgangsseitig eine nochmals verdoppelte Frequenz von 16 kHz.

Mit anderen Worten, jede Saugdrosselstufe mit den Saugdrosseln 18, 18b bzw. 18c, 18d bzw. 18e, 18f bewirkt eine Verdoppelung der Frequenz der Taktfrequenz f. Im vorliegenden Ausführungsbeispiel wird die Ausgangstaktfrequenz auf ein Viertel reduziert. Diese Reduzierung der Ausgangstaktfrequenz reduziert die Schaltverluste in den Gleichspannungs-Wandlereinheiten 8a, 8b, 8c, 8d. So können Schaltverluste durch zusätzliche Gleichspannungs-Wandlereinheiten 8a, 8b, 8c, 8d reduziert oder auch kompensiert werden.

Des Weiteren ist im vorliegenden Ausführungsbeispiel das Steuergerät 24 dazu ausgebildet die Ansteuersignalfolge ASF derart anzupassen, dass die Gleichspannungs-Wandlereinheiten 8a, 8b, 8c, 8d zeitlich versetzt angesteuert werden.

Im Betrieb werden im vorliegenden Ausführungsbeispiel jede der beiden Halbbrücken der Gleichspannungs-Wandlereinheiten 8a, 8b, 8c, 8d durch ein um 180° versetztes Takten der beiden jeweiligen Halbbrücken der Gleichspannungs-Wandlereinheiten 8a, 8b, 8c, 8d angesteuert.

Dabei stellt im vorliegenden Ausführungsbeispiel das Steuergerät 24 eine Ansteuersignalfolge ASF mit einem eigenen Trägersignal für die Ansteuerung der jeweiligen Halbbrücken der Gleichspannungs-Wandlereinheiten 8a, 8b, 8c, 8d bereit.

Damit jede Saugdrosselstufe mit den Saugdrosseln 18, 18b bzw. 18c, 18d bzw. 18e, 18f eine Verdoppelung der Frequenz der Taktfrequenz f bewirkt wird im vorliegenden Ausführungsbeispiel wird die erste Halbbrücke mit den ansteuerbaren Halbleiterschaltelementen 16a, 16c der ersten Gleichspannungs-Wandlereinheit 8a mit Schaltpunkten bei 0° angesteuert, während die zweite Halbbrücke mit den ansteuerbaren Halbleiterschaltelementen 16b, 16d der ersten der Gleichspannungs-Wandlereinheit 8a mit Schaltpunkten bei 180° angesteuert wird.

Ferner wird im vorliegenden Ausführungsbeispiel analog die erste Halbbrücke mit den ansteuerbaren Halbleiterschaltelementen 16a, 16c der zweiten Gleichspannungs-Wandlereinheit 8b mit Schaltpunkten bei 90° angesteuert, während die zweite Halbbrücke mit den ansteuerbaren Halbleiterschaltelementen 16b, 16d der zweiten Gleichspannungs-Wandlereinheit 8b mit Schaltpunkten bei 270° angesteuert wird.

Des Weiteren wird im vorliegenden Ausführungsbeispiel analog die erste Halbbrücke mit den ansteuerbaren Halbleiterschaltelementen 16a, 16c der dritten Gleichspannungs-Wandlereinheit 8c mit Schaltpunkten bei 45° angesteuert, während die zweite Halbbrücke mit den ansteuerbaren Halbleiterschaltelementen 16b, 16d der dritten Gleichspannungs-Wandlereinheit 8c mit Schaltpunkten bei 225° angesteuert wird.

Schließlich wird im vorliegenden Ausführungsbeispiel analog die erste Halbbrücke mit den ansteuerbaren Halbleiterschaltelementen 16a, 16c der vierten Gleichspannungs-Wandlereinheit 8d mit Schaltpunkten bei 135° angesteuert, während die zweite Halbbrücke mit den ansteuerbaren Halbleiterschaltelementen 16b, 16d der vierten Gleichspannungs-Wandlereinheit 8d mit Schaltpunkten bei 315° angesteuert wird.

Es kann auch vorgesehen sein, dass die Taktfrequenz f unabhängig von der Anzahl n der Gleichspannungs-Wandlereinheiten 8a, 8b, 8c, 8d gleich bleibt. D.h., es erfolgt lediglich eine zeitlich versetzt Ansteuerung der Gleichspannungs-Wandlereinheiten 8a, 8b, 8c, 8d. Auch so kann die Energieeffizienz gesteigert werden und es können zusätzlich Degradationseffekten durch Rippelströme an der Elektrolyseeinrichtung 6 abgeschätzt werden.

So kann eine Rippelspannung der Ausgangsspannung deutlich reduziert werden, z.B. auf eine Restwelligkeit, die im Bereich von 3% bis 5% liegt.

Im vorliegenden Ausführungsbeispiel stellt jede der Gleichspannungs-Wandlereinheiten 8a, 8b, 8c, 8d einen elektrischen Ausgangsgleichstrom mit einer Stromstärke von 2000 A bereit bei einer elektrischen Gleichspannung von 1350 V. So kann mit den im vorliegenden Ausführungsbeispiel vier Gleichspannungs-Wandlereinheiten 8a, 8b, 8c, 8d eine elektrische Gesamtstromstärke von 8000 A bereitgestellt werden. Eine Anpassung an eine erforderliche Gesamtstromstärke kann durch Hinzufügen oder auch Entfernen von Gleichspannungs-Wandlereinheiten 8a, 8b, 8c, 8d erreicht werden, wobei das Steuergerät 24 selbsttätig dann die Anzahl n der Gleichspannungs-Wandlereinheiten 8a, 8b, 8c, 8d bestimmt und die Ansteuersignalfolge ASF entsprechend anpasst.

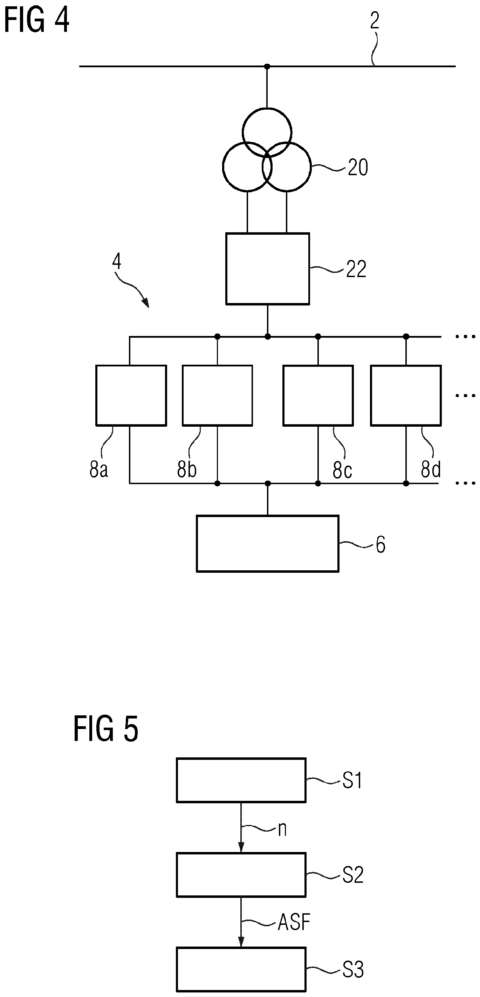

Es wird nun zusätzlich auf Figur 4 Bezug genommen.

Im vorliegenden Ausführungsbeispiel ist das elektrische Netz 2 als Wechselstromnetz, z.B. als Drehstromnetz, ausgebildet.

Daher sind zwischen dem Netz 2 und dem Gleichspannungswandler 4 ein im vorliegenden Ausführungsbeispiel als Drehstromtransformator ausgebildeter Transformator 20 und ein Gleichrichter 22 vorgesehen.

Durch die Zwischenschaltung des Transformators 20 und des Gleichrichters 22 kann also der Gleichspannungswandler 4 auch mit einem Wechselstromnetz bzw. einem Drehstromnetz elektrisch verbunden werden.

Es wird zusätzlich auf Figur 5 Bezug genommen.

Dargestellt ist ein Verfahrensablauf zum Betrieb des in Figur 1 gezeigten Systems 2.

In einem ersten Schritt S1 erfasst das Steuergerät 24, z.B. während einer Inbetriebnahme bzw. während seiner Inbetriebnahme während einer Initialisierungsphase, die Anzahl n der Gleichspannungs-Wandlereinheiten 8a, 8b, 8c, 8d.

In einem weiteren Schritt S2 passt das Steuergerät 24 die Ansteuersignalfolge ASF an die erfasste Anzahl n der Gleichspannungs-Wandlereinheiten 8a, 8b, 8c, 8d an.

Hierzu passt das Steuergerät 24 im vorliegenden Ausführungsbeispiel die Taktfrequenz der Ansteuersignalfolge ASF an die erfasste Anzahl n der Gleichspannungs-Wandlereinheiten 8a, 8b, 8c, 8d an und modifiziert die Ansteuersignalfolge ASF derart, dass die ansteuerbaren Halbleiterschaltelemente 16a, 16b, 16c, 16d der zumindest vier Gleichspannungs-Wandlereinheiten 8a, 8b, 8c, 8d zeitlich versetzt angesteuert werden.

Mit der so bestimmten Ansteuersignalfolge ASF werden dann im Betrieb die ansteuerbaren Halbleiterschaltelemente 16a, 16b, 16c, 16d der jeweiligen Gleichspannungs-Wandlereinheiten 8a, 8b, 8c, 8d angesteuert, um die direkte Wandlung einer elektrischen Eingangsgleichspannung in eine elektrische Ausgangsgleichspannung zu bewirken.

Abweichend vom vorliegenden Ausführungsbeispiel kann die Reihenfolge der Schritte auch eine andere sein. Ferner können mehrere Schritte auch zeitgleich bzw. simultan ausgeführt werden. Des Weiteren können auch einzelne Schritte ausgelassen oder übersprungen werden.

So können z.B. Transformatorverluste vermieden werden durch eine direkte Anbindung einer Elektrolyseeinrichtung ein Niederspannungs-Gleichstromnetz.

## Patentansprüche

1. Verfahren zum Betrieb eines Gleichstromstellers zur Versorgung einer Elektrolyseeinrichtung (6) mit elektrischer Betriebsenergie, bei dem in einem Schritt (S3) zumindest vier ansteuerbare Halbleiterschaltelemente (16a, 16b, 16c, 16d) in H-Brückenanordnung mit einer vorbestimmter Ansteuersignalfolge (ASF) angesteuert werden zur direkten Wandlung einer elektrischen Eingangsgleichspannung in eine elektrische Ausgangsgleichspannung, **dadurch gekennzeichnet, dass** zumindest zwei Gleichspannungs-Wandlereinheiten (8a, 8b, 8c, 8d) mit je vier ansteuerbaren Halbleiterschaltelemente (16a, 16b, 16c, 16d) in H-Brückenanordnung mit nachgeschalteten Saugdrosseln (18a, 18b, 18c, 18d, 18e, 18f) verwendet werden, mit den Schritten:
(S1) Erfassen einer Anzahl (n) der Gleichspannungs-Wandlereinheiten (8a, 8b, 8c, 8d), und
(S2) Anpassen der Ansteuersignalfolge (ASF) an die erfasste Anzahl (n) der Gleichspannungs-Wandlereinheiten (8a, 8b, 8c, 8d).

2. Verfahren nach Anspruch 1, wobei der Schritt (S2) Anpassen der Ansteuersignalfolge (ASF) an die erfasste Anzahl (n) der Gleichspannungs-Wandlereinheiten (8a, 8b, 8c, 8d) ein Anpassen einer Taktfrequenz der Ansteuersignalfolge (ASF) an die erfasste Anzahl (n) der Gleichspannungs-Wandlereinheiten (8a, 8b, 8c, 8d) aufweist.

3. Verfahren nach Anspruch 1 oder 2, wobei der Schritt (S2) Anpassen der Ansteuersignalfolge (ASF) an die erfasste Anzahl (n) der Gleichspannungs-Wandlereinheiten (8a, 8b, 8c, 8d) ein Bereitstellen einer Ansteuersignalfolge (ASF) zum zeitlich versetzten Ansteuern der ansteuerbaren Halbleiterschaltelemente (16a, 16b, 16c, 16d) der zumindest Gleichspannungs-Wandlereinheiten (8a, 8b, 8c, 8d) aufweist.

4. Computerprogrammprodukt, ausgebildet zum Ausführen eines Verfahrens nach einem der Ansprüche 1 bis 3.

5. Gleichspannungswandler (4) zur Versorgung einer Elektrolyseeinrichtung (6) mit elektrischer Betriebsenergie, mit zumindest vier ansteuerbaren Halbleiterschaltelementen (16a, 16b, 16c, 16d) in H-Brückenanordnung wobei ein Steuergerät (24) des Gleichspannungswandlers (4) dazu ausgebildet ist, eine vorbestimmte Ansteuersignalfolge (ASF) der zumindest vier ansteuerbaren Halbleiterschaltelemente (16a, 16b, 16c, 16d) bereitzustellen zur direkten Wandlung einer elektrischen Eingangsgleichspannung in eine elektrische Ausgangsgleichspannung, **dadurch gekennzeichnet, dass** der Gleichspannungswandler (4) zumindest zwei Gleichspannungs-Wandlereinheiten (8a, 8b, 8c, 8d) mit je vier ansteuerbaren Halbleiterschaltelementen (16a, 16b, 16c, 16d) in H-Brückenanordnung mit nachgeschalteten Saugdrosseln (18a, 18b, 18c, 18d, 18e, 18f) aufweist, wobei das Steuergerät (24) des Gleichspannungswandlers (4) dazu ausgebildet ist, eine Anzahl (n) der Gleichspannungs-Wandlereinheiten (8a, 8b, 8c, 8d) zu erfassen und die Ansteuersignalfolge (ASF) an die erfasste Anzahl (n) der Gleichspannungs-Wandlereinheiten (8a, 8b, 8c, 8d) anzupassen.

6. Gleichspannungswandler (4) nach Anspruch 5, wobei das Steuergerät (24) des Gleichspannungswandlers (4) dazu ausgebildet ist, eine Taktfrequenz der Ansteuersignalfolge (ASF) an die erfasste Anzahl (n) der Gleichspannungs-Wandlereinheiten (8a, 8b, 8c, 8d) anzupassen.

7. Gleichspannungswandler (4) nach Anspruch 5 oder 6, wobei das Steuergerät (24) des Gleichspannungswandlers (4) dazu ausgebildet ist, eine Ansteuersignalfolge (ASF) zum zeitlich versetzten Ansteuern der ansteuerbaren Halbleiterschaltelemente (16a, 16b, 16c, 16d) der Gleichspannungs-Wandlereinheiten (8a, 8b, 8c, 8d) bereitzustellen.

8. Steuergerät (24) für einen Gleichspannungswandler (4) nach einem der Ansprüche 5 bis 7 derart ausgebildet, dass dieses bei einer Ansteuerung des Gleichspannungswandlers (4) die Ansteuersignalfolge (ASF) derart bestimmt, dass die erste Saugdrossel (18a) und die zweite Saugdrossel (18b) mit der gleichen elektrischen Stromstärke durchflossen werden.

## Claims

1. Method for operating a DC chopper for supplying electrical operating power to an electrolysis device (6), wherein, in one step (S3), at least four actuatable semiconductor switching elements (16a, 16b, 16c, 16d) in an H-bridge arrangement are actuated by a predetermined actuation signal sequence (ASF) for the direct conversion of an electrical DC input voltage into an electrical DC output voltage, **characterized in that** at least two DC voltage converter units (8a, 8b, 8c, 8d) are used, each having four actuatable semiconductor switching elements (16a, 16b, 16c, 16d) in an H-bridge arrangement with interphase transformers (18a, 18b, 18c, 18d, 18e, 18f) connected downstream, comprising the following steps:
(S1) detection of a number (n) of DC voltage converter units (8a, 8b, 8c, 8d), and
(S2) adaptation of the actuation signal sequence (ASF) to the detected number (n) of DC voltage converter units (8a, 8b, 8c, 8d).

2. Method according to Claim 1, wherein step (S2) for the adaptation of the actuation signal sequence (ASF) to the detected number (n) of DC voltage converter units (8a, 8b, 8c, 8d) comprises an adaptation of a clock frequency of the actuation signal sequence (ASF) to the detected number (n) of DC voltage converter units (8a, 8b, 8c, 8d).

3. Method according to Claim 1 or 2, wherein step (S2) for the adaptation of the actuation signal sequence (ASF) to the detected number (n) of DC voltage converter units (8a, 8b, 8c, 8d) comprises the delivery of an actuation signal sequence (ASF) for the temporally staggered actuation of the actuatable semiconductor switching elements (16a, 16b, 16c, 16d), at least of the DC voltage converter units (8a, 8b, 8c, 8d).

4. Computer program product designed for carrying out a method according to any of Claims 1 to 3.

5. DC voltage converter (4) for supplying electrical operating power to an electrolysis device (6), having at least four actuatable semiconductor switching elements (16a, 16b, 16c, 16d) in an H-bridge arrangement, wherein a controller (24) of the DC voltage converter (4) is designed to deliver a predetermined actuation signal sequence (ASF) to the at least four actuatable semiconductor switching elements (16a, 16b, 16c, 16d) for the direct conversion of an electrical DC input voltage into an electrical DC output voltage, **characterized in that** the DC voltage converter (4) comprises at least two DC voltage converter units (8a, 8b, 8c, 8d) each having four actuatable semiconductor switching elements (16a, 16b, 16c, 16d) in an H-bridge arrangement with interphase transformers (18a, 18b, 18c, 18d, 18e, 18f) connected downstream, wherein the controller (24) of the DC voltage converter (4) is designed to detect a number (n) of DC voltage converter units (8a, 8b, 8c, 8d) and to adapt the actuation signal sequence (ASF) to the detected number (n) of DC voltage converter units (8a, 8b, 8c, 8d).

6. DC voltage converter (4) according to Claim 5, wherein the controller (24) of the DC voltage converter (4) is designed to adapt a clock frequency of the actuation signal sequence (ASF) to the detected number (n) of DC voltage converter units (8a, 8b, 8c, 8d).

7. DC voltage converter (4) according to Claim 5 or 6, wherein the controller (24) of the DC voltage converter (4) is designed to deliver an actuation signal sequence (ASF) for the temporally staggered actuation of the actuatable semiconductor switching elements (16a, 16b, 16c, 16d) of the DC voltage converter units (8a, 8b, 8c, 8d).

8. Controller (24) for a DC voltage converter (4) according to any of Claims 5 to 7, designed in such a way that, upon actuation of the DC voltage converter (4), the actuation signal sequence (ASF) is determined in such a way that a current of equal current strength flows through the first interphase transformer (18a) and the second interphase transformer (18b).

## Revendications

1. Procédé pour faire fonctionner un régulateur de courant continu pour l'alimentation d'un dispositif (6) d'électrolyse en énergie électrique de fonctionnement, dans lequel, dans un stade (S3), on commande au moins quatre éléments (16a, 16b, 16c, 16d) de coupure à semiconducteur pouvant être commandés en un montage en pont H par une suite (ASF) de signal de commande déterminée à l'avance pour la transformation directe d'une tension continue électrique d'entrée en une tension continue électrique de sortie, **caractérisé en ce que** l'on utilise au moins deux unités (8a, 8b, 8c, 8d) de transformateur de tension continue ayant chacune quatre éléments (16a, 16b, 16c, 16d) de coupure à semiconducteur pouvant être commandés en un montage en pont H avec des bobines (18a, 18b, 18c, 18d, 18e, 18f) d'absorption montées en aval, comprenant les stades :
(S1) relevé du nombre (n) d'unités (8a, 8b, 8c, 8d) de transformateur de tension continue, et
(S2) adaptation de la suite (ASF) de signal de commande au nombre (n) relevé des unités (8a, 8b, 8c, 8d) de transformateur de tension continue.

2. Procédé suivant la revendication 1, dans lequel le stade (S2) d'adaptation de la suite (ASF) de signal de commande au nombre (n) relevé des unités (8a, 8b, 8c, 8d) de transformateur de tension continue comporte une adaptation d'une fréquence d'horloge de la suite (ASF) de signal de commande au nombre (n) relevé des unités (8a, 8b, 8c, 8d) de transformateur de tension continue.

3. Procédé suivant la revendication 1 ou 2, dans lequel le stade (S2) d'adaptation de la suite (ASF) de signal de commande au nombre (n) relevé des unités (8a, 8b, 8c, 8d) de transformateur de tension continue comporte une mise à disposition d'une suite (ASF) de signal de commande pour la commande décalée dans le temps des éléments (16a, 16b, 16c, 16d) de coupure à semiconducteur pouvant être commandés des au moins une unité (8a, 8b, 8c, 8d) de transformateur de tension continue.

4. Produit de programme d'ordinateur constitué pour l'exécution d'un procédé suivant l'une des revendications 1 à 3.

5. Transformateur (4) de tension continue pour l'alimentation d'un dispositif (6) d'électrolyse en énergie électrique de fonctionnement comprenant au moins quatre éléments (16a, 16b, 16c, 16d) de coupure à semiconducteur pouvant être commandés en un montage en pont H,
dans lequel un appareil (24) de commande du transformateur (4) de tension continue est constitué pour disposer d'une suite (ASF) de signal de commande déterminée à l'avance des au moins quatre éléments (16a, 16b, 16c, 16d) de coupure à semiconducteur pouvant être commandés pour la transformation directe d'une tension continue électrique d'entrée en une tension continue électrique de sortie, **caractérisé en ce que** le convertisseur (4) de tension continue a au moins deux unités (8a, 8b, 8c, 8d) de transformateur de tension continue ayant chacune quatre éléments (16a, 16b, 16c, 16d) de coupure à semiconducteur pouvant être commandés en un montage en pont H avec des bobines (18a, 18b, 18c, 18d, 18e, 18f) d'absorption montées en aval, dans lequel l'appareil (24) de commande du transformateur (4) de tension continue est constitué pour relever un nombre (n) des unités (8a, 8b, 8c, 8d) de transformateur de tension continue et pour adapter la suite (ASF) de signal de commande au nombre (n) relevé des unités (8a, 8b, 8c, 8d) de transformateur de tension continue.

6. Transformateur (4) de tension continue suivant la revendication 5, dans lequel l'appareil (24) de commande du transformateur (4) de tension continue est constitué pour adapter une fréquence d'horloge de la suite (ASF) de signal de commande au nombre (n) relevé des unités (8a, 8b, 8c, 8d) de transformateur de tension continue.

7. Transformateur (4) de tension continue suivant la revendication 5 ou 6, dans lequel l'appareil (24) de commande du convertisseur (4) de tension continue est constitué pour disposer d'une suite (ASF) de signal de commande pour la commande décalée dans le temps des éléments (16a, 16b, 16c, 16d) de coupure à semiconducteur pouvant être commandés des unités (8a, 8b, 8c, 8d) de transformateur de tension continue.

8. Appareil (24) de commande d'un convertisseur (4) de tension continue suivant l'une des revendications 5 à 7, constitué de manière à ce que celui-ci détermine, lors d'une commande du transformateur (4) de tension continue, la suite (ASF) de signal de commande, de manière à faire passer dans la première bobine (18a) d'absorption et la deuxième bobine (18b) d'absorption un courant électrique de même intensité.
